# FASCICULE DE BREVET EUROPEEN

(11) **EP 3 208 154 B1**
(45) Date de publication et mention de la délivrance du brevet: **07.02.2018**
(21) Numéro de dépôt: 16203926.7
(22) Date de dépôt: 14.12.2016
(51) Int. Cl.: B60R 13/10

(54) **PROCÉDÉ POUR LA RÉALISATION D'UNE PLAQUE SIGNALÉTIQUE OU D'IMMATRICULATION ET PLAQUE AINSI OBTENUE**
VERFAHREN ZUR HERSTELLUNG EINES TYPEN- ODER NUMMERNSCHILDS, UND SO ERHALTENES SCHILD
METHOD FOR FORMING A NAMEPLATE OR REGISTRATION PLATE AND PLATE THUS OBTAINED

(30) Priorité: 22.02.2016 FR 1651411
(43) Date de publication de la demande: 23.08.2017
(73) Titulaire: Richard, Norbert, 74120 Megeve (FR); Richard, Norman, 01000 Bourg en Bresse (FR)
(72) Inventeur: Richard, Norbert, 74120 Megeve (FR); Richard, Norman, 01000 Bourg en Bresse (FR)
(74) Mandataire: Cabinet Laurent & Charras

(56) Documents cités:
- EP-A1- 2 653 348
- FR-A1- 2 989 943
- FR-A1- 2 989 944

## Description

### DOMAINE DE L'INVENTION

L'invention concerne le domaine des plaques signalétiques, d'identification, ou d'immatriculation.

Elle vise plus particulièrement les plaques dites de nouvelle génération, c'est-à-dire les plaques constituées d'un support rigide, réalisé en matière plastique, notamment transparente, recevant un film ou bande souple portant des informations de nature signalétique ou d'immatriculation d'un véhicule automobile.

### ART ANTERIEUR

Les plaques d'immatriculation et autres plaques signalétiques, dites de nouvelle génération, et réalisées en matière plastique ont permis de simplifier de manière importante leur procédé de réalisation, dans la mesure où il n'y a plus lieu de mettre en oeuvre le principe de l'emboutissage poinçon / matrice, pour la réalisation des différents caractères, notamment alphanumériques, d'identification ou d'immatriculation.

En effet, avec ces plaques d'immatriculation en matière plastique, on imprime lesdites informations, typiquement au moyen d'une imprimante thermique ou laser, sur un film à propriétés réflectrices ou rétro-réfléchissantes, de sorte qu'un gain de temps significatif peut être obtenu. Ce film est alors solidarisé par collage à la face interne d'une plaque rigide externe. De telles plaques ont été décrites dans le document FR 2 989 944 qui divulgue également un procédé selon le préambule de la revendication 1. Si incontestablement, la mise en oeuvre de cette nouvelle technologie permet un gain important en termes de temps, en revanche on se heurte à une difficulté, dès lors que l'on souhaite associer à ces plaques de la couleur, ou rajouter des logos ou informations additionnelles. En effet, il peut être envisagé d'associer des bordures ou des fonds colorés de nature différente, nécessitant un stock important de films plastiques, engendrant non seulement de l'encombrement, mais également une gestion de stocks en termes financiers importante.

### EXPOSE DE L'INVENTION

L'objectif de l'invention est de proposer une solution à la fois simple et économique, pour multiplier les configurations possibles de telles plaques d'identification, signalétiques, mais également de plaques d'immatriculations.

A cet effet, elle vise un procédé pour la réalisation d'une plaque signalétique ou d'immatriculation de forme sensiblement rectangulaire selon la revendication 1. En d'autres termes l'invention consiste à titre principal à pouvoir associer, de manière simple, en raison de l'identité des formats, une touche de couleur ; il suffit en effet pour se faire de disposer d'un stock de feuilles de format standard de différentes couleurs, c'est-à-dire correspondant au format de la plaque finale à réaliser,

Selon une caractéristique de l'invention, la prédécoupe réalisée au niveau de la feuille à imprimer, est réalisée selon toute sa périphérie, de telle sorte à générer une bordure présentant une largeur typique de l'ordre de plus ou moins 3 millimètres..

Selon une autre caractéristique de l'invention, la feuille principale, faisant l'objet d'une impression est une feuille réalisée en matériau rétro-réfléchissant, compatible avec les normes en vigueur en termes d'immatriculation.

Une telle feuille est typiquement composée de matière plastique, intégrant des microbilles de verre ou de plastique, assurant cette rétro-réflexion, telle que commercialisée par 3M, NCI, ORAFOL ou encore DAOMING.

Selon une autre caractéristique de l'invention, préalablement à la fixation de la feuille imprimée contre la face interne encollée de la plaque rigide, on positionne contre cette face préencollée un motif fixé sur une feuille intermédiaire, dont les dimensions correspondent là encore sensiblement à celles de la plaque signalétique ou d'immatriculation à réaliser.

### BREVE DESCRIPTION DES FIGURES

La manière dont l'invention peut être réalisée et les avantages qui en découlent, ressortiront mieux des exemples de réalisation qui suivent, donnés à titre indicatif et non limitatif à l'appui des figures annexées.
La figure 1 est une représentation schématique en éclatée d'une première forme de réalisation de l'invention, tendant à la réalisation d'une plaque d'immatriculation.
Les figures 2a, 2b et 2c illustrent une première étape du procédé de réalisation de la plaque d'immatriculation à réaliser.
Les figures 3a et 3b illustrent une seconde étape du procédé de réalisation de cette plaque.
La figure 4 illustre une troisième étape de ce procédé de réalisation.
La figure 5 représente la plaque définitive obtenue selon le procédé de l'invention.
La figure 6 est une vue schématique en éclaté d'un second mode de réalisation de l'invention.
Les figures 7, 8 et 9 illustrent les différentes étapes de mise en oeuvre de ce second procédé de réalisation.
La figure 10 est la plaque obtenue selon ce second procédé de réalisation.

### DESCRIPTION DETAILLEE DE L'INVENTION

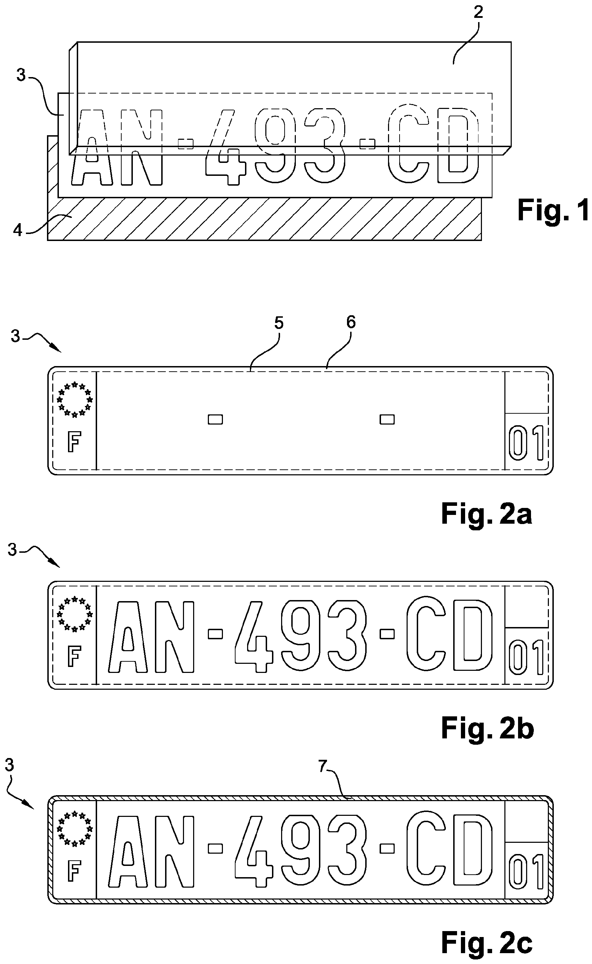

Les figures 1 à 5 illustrent donc un premier mode de réalisation du procédé de l'invention.

Dans ce mode de réalisation, on a décrit la réalisation d'une plaque d'immatriculation, étant entendu que ce procédé pourrait s'appliquer à toutes plaques signalétiques ou d'identification.

Cette plaque (1) résulte de la superposition d'un certain nombre d'éléments constitutifs, et notamment :
- d'une plaque rigide (2) présentant une épaisseur typique de 1 à 5 millimètres, et par exemple réalisée en un matériau choisi dans le groupe comprenant le PET (polyéthylène téréphtalate), le polypropylène, le PVC, le PVC-GOMME, le polystyrène, et le polycarbonate, le PMMA. Cette plaque (2) est transparente.
- d'une feuille (3), dite feuille principale, en l'espèce réalisée en matériau rétro-réfléchissant, et conforme aux normes en vigueurs, et notamment en France, en terme de plaque d'immatriculation ;
- d'une feuille (4), dite feuille secondaire, avantageusement colorée.

Les feuilles (3) et (4) sont toutes les deux également réalisées en matière plastique, et par exemple en PET, ou en polycarbonate, la feuille (4) étant quant à elle dépourvue de propriétés rétro-réfléchissantes.

La plaque rigide (2), ainsi que les feuilles (3) et (4) présentent sensiblement les mêmes dimensions en termes de longueur et de largeur. En revanche, les feuilles (3) et (4) sont beaucoup plus minces, typiquement d'une épaisseur comprise entre 0,1 et 0,5 millimètre, et ne sont pas rigides.

La plaque rigide (2) est préencollée au niveau de sa face interne, c'est-à-dire la face non visible une fois la plaque d'immatriculation réalisée. Ce préencollage est en l'espèce constitué d'un film adhésif, protégé par une feuille mince en silicone, afin de protéger ce film adhésif avant son utilisation.

De la même manière, la feuille principale (3), en l'espèce réalisée en matériau rétro-réfléchissant, comporte également sur sa face interne un film adhésif, lui aussi protégé par un film silicone (non-représenté).

Qu'il s'agisse de la plaque rigide (2), de la feuille principale (3), ou de la feuille colorée (4), elles présentent toutes les mêmes dimensions en largeur et en longueur, et présentent donc une forme générale rectangulaire ainsi qu'on peut bien l'observer au sein des figures.

Selon une caractéristique de l'invention, la feuille principale (3) est munie de prédécoupes (5), s'étendant dans l'exemple décrit, sur toute sa périphérie, de telle sorte à définir une bordure périphérique (6).

Selon l'invention, la feuille (3) subit une impression thermique, en l'espèce du numéro d'immatriculation souhaité, au moyen d'une imprimante thermique, telle que par exemple décrite dans le document EP-2 993 925, ou plus simplement d'une simple imprimante thermique à format unique, et correspondant au format de la plaque signalétique ou d'immatriculation à réaliser. C'est ce que l'on a identifié par la figure 2b.

Après impression, on enlève la bordure périphérique (6), de telle sorte à laisser subsister une zone vierge (7), également périphérique.

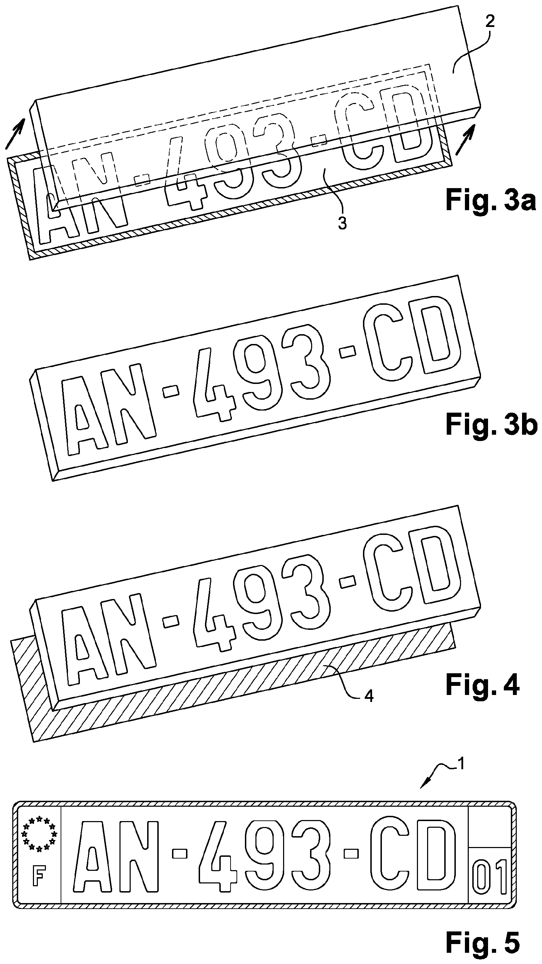

On retire alors le film mince protégeant le film adhésif recouvrant la face interne de la plaque rigide (2), et on colle la face externe de la feuille principale (3) contre la face interne de la plaque rigide (2) (figures 3a, 3b), et ce, par simple laminage dans un gabarit de forme et de dimension correspondantes à la plaque finale à réaliser.

Lors de l'étape suivante (figure 4), on retire la feuille siliconée protégeant le film adhésif recouvrant la face interne de la feuille principale (3), et on vient coller la feuille secondaire colorée (4) contre cette face interne, là encore par laminage et avec le même gabarit..

On obtient ainsi la plaque (1) illustrée à la figure (5), présentant une bordure périphérique colorée, apparaissant en transparence au niveau de la bordure périphérique (7).

On conçoit ainsi que l'on peut varier à l'infini la plaque (1) ainsi obtenue, notamment par le choix des couleurs, outre par le choix des indications, puisqu'aussi bien si l'exemple de réalisation décrit a été en relation avec une plaque d'immatriculation, il peut parfaitement être envisagé de remplacer la feuille principale (3) par une feuille classique, c'est-à-dire non-pourvue de propriétés rétro-réfléchissantes, et d'imprimer tout type d'indication.

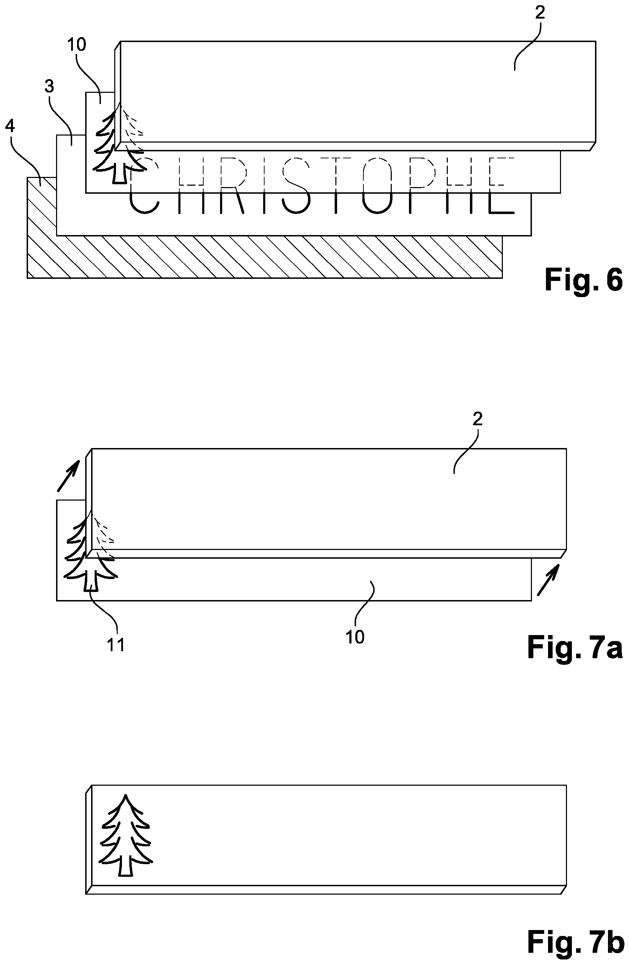

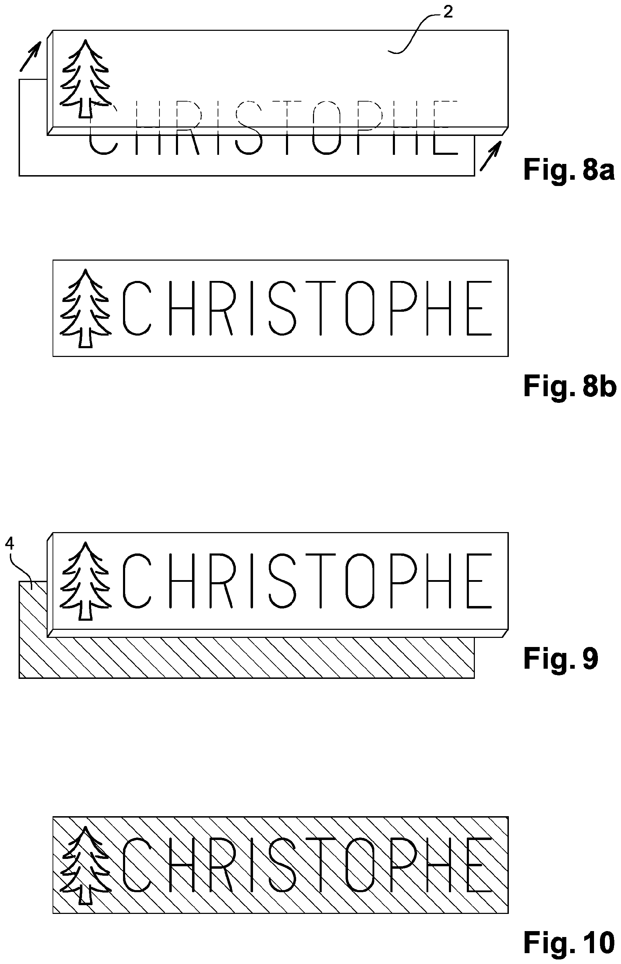

Selon une variante illustrée en relation avec les figures 6 à 10, on adjoint en outre un motif particulier, de toutes natures, de toutes taille et de toutes couleurs.

De fait, on intercale entre la plaque rigide (2) et la feuille principale (3) une feuille intermédiaire (10), comportant sur sa face externe au moins un motif (11), notamment fixé sur la feuille (10) par simple adhésif transfert, la face envers de cette feuille intermédiaires (10) étant enduite d'un film adhésif transfert, protégée par un film siliconé par exemple.

Cette feuille (10) peut être transparente, et est collée sur la face interne de la plaque rigide (2). En tout état de cause, cette feuille (10) présente là encore, les mêmes dimensions (longueur et largeur) que la plaque rigide (2) et les autres feuilles constitutives de la plaque définitive.

Les autres étapes du procédé demeurent identiques avec possibilité ou non d'enlever la bordure périphérique résultant de la prédécoupe de la feuille principale (3).

On conçoit là encore la multitude de plaques susceptibles d'être ainsi réalisées par l'invention en terme d'indication, de décor, de couleur, ce à l'aide de feuilles et plaques de dimensions standards et égales, favorisant l'étape d'assemblage par collage en suite de laminage par un gabarit là encore standard.

## Revendications

1. Procédé pour la réalisation d'une plaque signalétique, d'identification ou d'immatriculation (1) de forme sensiblement rectangulaire, comprenant les étapes suivantes :
- imprimer une feuille plastique, dite feuille principale (3), l'impression étant réalisée sur la face supérieure de la feuille,
- à coller ladite face supérieure après impression contre la face interne d'une plaque (2) rigide transparente préencollée, dont les dimensions correspondent sensiblement à celles de la plaque signalétique ou d'immatriculation;
à coller contre l'ensemble ainsi réalisé une seconde feuille (4), de couleur ou de matière différente, et dont les dimensions correspondent à celles de la plaque signalétique ou d'identification ou d'immatriculation à réaliser,
caractérisé :
• en ce que les dimensions de la feuille principale (3) correspondent sensiblement à celles de la plaque signalétique, d'identification ou d'immatriculation à réaliser,
• en ce que ladite feuille principale (3) est constituée d'un complexe bicouches, constitué d'une face supérieure et d'un film adhésif, ce dernier étant temporairement protégé par un film de protection, ladite face supérieure étant pourvue d'une prédécoupe (5) s'étendant sur partie de sa surface,
• et en ce que le procédé comprend les étapes suivantes :
▪ retirer partie de ladite face supérieure, extérieure à la prédécoupe (5) avant collage contre la face interne de la plaque rigide transparente (2) ;
▪ à retirer le film de protection du film adhésif de ladite feuille principale (3) avant collage de la seconde feuille (4) contre l'ensemble.

2. Procédé pour la réalisation d'une plaque signalétique, d'identification ou d'immatriculation (1) selon la revendication 1, ***caractérisé* en ce que** la prédécoupe (5) réalisée au niveau de la feuille principale (3) à imprimer, est réalisée selon toute sa périphérie, de telle sorte à générer une bordure périphérique (7) présentant une largeur typique de l'ordre de 5 millimètres.

3. Procédé pour la réalisation d'une plaque signalétique, d'identification ou d'immatriculation (1) selon l'une des revendications 1 et 2, ***caractérisé* en ce que** la feuille principale (3) faisant l'objet d'une impression est une feuille réalisée en matériau rétro-réfléchissant.

4. Procédé pour la réalisation d'une plaque signalétique, d'identification ou d'immatriculation (1) selon l'une des revendications 1 à 3, ***caractérisé* en ce que** préalablement à la fixation de la feuille principale (3) imprimée contre la face interne encollée de la plaque rigide (2), on positionne contre cette face préencollée un feuille intermédiaire (10) comportant au moins un motif (11), les dimensions de ladite feuille intermédiaire (10) correspondant sensiblement à celles de la plaque signalétique ou d'immatriculation à réaliser.

5. Plaque signalétique, d'identification ou d'immatriculation (1) obtenue selon le procédé de l'une des revendications 1 à 4.

## Patentansprüche

1. Verfahren zum Herstellen eines Typenschildes, Kennschildes oder Nummernschildes (1), im Wesentlichen in rechteckiger Form, das die folgenden Schritte umfasst:
- Drucken einer Kunststofffolie, der sogenannten Hauptfolie (3), dabei erfolgt der Druck auf der Oberseite der Folie,
- diese Oberseite nach dem Bedrucken, gegen die Innenseite einer transparenten starren, vorgeklebten Platte (2) zu kleben, deren Abmessungen im Wesentlichen denen des Typenschildes oder Nummernschildes, entsprechen;
- auf die so hergestellte Einheit eine zweite Folie (4) mit anderer Farbe oder aus anderem Material zu kleben, deren Abmessungen denen des herzustellenden Typenschildes, Kennschildes oder Nummernschildes entsprechen,
**gekennzeichnet dadurch, dass**
• die Abmessungen der Hauptfolie (3), im Wesentlichen denen des herzustellenden Typenschildes, Kennschildes oder Nummernschildes entsprechen,
• dass die sogenannte Hauptfolie (3), aus einem zweischichtigen Komplex besteht, bestehend aus einer Oberseite und einer Klebefolie, diese wird vorübergehend von einer Schutzfolie geschützt, diese Oberseite ist mit einer Vorstanzung (5) versehen, die sich über einen Teil der Oberfläche erstreckt,
und dadurch, dass das Verfahren die folgenden Schritte umfasst:
▪ Entfernen dieser Oberseite, außen auf der Vorstanzung (5) vor dem Kleben auf die Innenseite der transparenten, starren Platte (2);
▪ Schutzfolie von der Klebefolie dieser Hauptfolie (3) entfernen, bevor die zweite Folie (4) gegen das Ganze geklebt wird.

2. Verfahren zum Herstellen eines Typenschildes, Kennschildes oder Nummernschildes (1), nach Anspruch 1, **dadurch gekennzeichnet, dass** die Vorstanzung (5), die in der zu bedruckenden Hauptfolie (3) vorgesehen ist, entlang ihres gesamten Peripherie ausgeführt wird, so dass sich eine periphere Umrandung (7) mit einer Breite in der Größenordnung von typischerweise 5 Millimetern ergibt.

3. Verfahren zum Herstellen eines Typenschildes, Kennschildes oder Nummernschildes (1), nach einem der Ansprüche 1 und 2, **dadurch gekennzeichnet, dass** die Hauptfolie (3), die bedruckt wird, aus einer Folie aus retroreflektierendem Material hergestellt wird.

4. Verfahren zum Herstellen eines Typenschildes, Kennschildes oder Nummernschildes (1), nach einem der Ansprüche 1 und 3, **dadurch gekennzeichnet, dass** vor der Befestigung der bedruckten Hauptfolie (3), an der beleimten Innenseite der starren Platte (2) eine Zwischenfolie (10) gegen diese vorgeleimte Seite positioniert wird, die mindestens ein Motiv (11) enthält, die Abmessungen dieser Zwischenfolie (10) entsprechen im Wesentlichen denen des herzustellenden Typenschildes oder Nummernschildes.

5. Typenschild, Kennschild oder Nummernschild (1) als Ergebnis des Verfahrens nach einem der Ansprüche 1 bis 4.

## Claims

1. Method for forming a data plate, name plate or registration plate (1) of essentially rectangular shape, including the following steps:
• print a plastic sheet, referred to as the principal sheet (3), with the printing being applied to the upper face of the sheet;
• bond the said upper face, after printing, against the internal face of a previously-glued transparent rigid plate (2) of which the dimensions essentially match those of the data plate or registration plate;
• bond a second sheet (4) to the assembly thus produced, of different color or material, of which the dimensions match those of the data plate, name plate or registration plate to be produced;
**characterized in that**:
• the dimensions of the main sheet (3) essentially match those of the data plate, name plate or registration plate to be produced;
• the said main sheet (3) is composed of a dual-layer complex composed of an upper face and an adhesive face, with the latter being temporarily protected by a protective film, and with the said upper face being endowed with a previously cut-out part (5) extending over part of its surface;
• the process includes the following steps:
▪ remove part of the upper exterior face of the cut-out (5) before bonding against the interior face of the transparent rigid plate (2);
▪ remove the protective film from the adhesive film of the said main sheet (3) before bonding of the second sheet (4) against the assembly.

2. Method for forming a data plate, name plate or registration plate (1) in accordance with claim 1, **characterized in that** the cut-out (5) in the main sheet (3) to be printed is formed over its entire periphery, such as to create a peripheral edge (7) having a typical width of around 5 mm.

3. Method for forming a data plate, name plate or registration plate (1) in accordance with one of claims 1 or 2, **characterized in that** the main sheet (3) to be printed is a sheet made of a retro-reflective material.

4. Method for forming a data plate, name plate or registration plate (1) in accordance with one of claims 1 to 3, **characterized in that** before securing the printed main sheet (3) against the interior glued face of the rigid face (2), one positions an intermediate sheet (10) against this pre-glued face, incorporating at least one pattern (11), with the dimensions of the said intermediate sheet (10) essentially matching those of the data plate or registration plate to be produced.

5. Data plate, name plate or registration plate (1) obtained in accordance with the process of one of claims 1 to 4.
